# EUROPEAN PATENT APPLICATION

(11) **EP 4 722 660 A1**
(43) Date of publication of application: **08.04.2026**
(21) Application number: 24815037.7
(22) Date of filing: 23.04.2024
(51) Int. Cl.: G01D 5/244

(54) **ENCODER, MOTOR SYSTEM, RECORDING METHOD, AND PROGRAM**

(30) Priority: 30.05.2023 JP 2023089081
(71) Applicant: Panasonic Intellectual Property Management Co., Ltd., Kadoma-shi, Osaka 571-0057 (JP)
(72) Inventor: TOMIDA, Yasuyuki, Kadoma-shi, Osaka 571-0057 (JP)
(74) Representative: SSM Sandmair
(86) International application number: PCT/JP2024/015889
(87) International publication number: WO 2024/247551

(57) **Abstract**

Processed information is stored even when a main power source is power outage. Encoder (6) includes a rotation detector, first processor (661), and second processor (662). The rotation detector is fed with power from main power source (11) or auxiliary power source (12). First processor (661) is fed with power from main power source (11) or auxiliary power source (12). First processor (661) performs first processing and management processing. The first processing is processing of obtaining a rotation speed of a detection target. The management processing is processing of managing a power feeding flag that indicates whether to feed power from auxiliary power source (12) to second processor (662) when main power source (11) is power outage. Second processor (662) is fed with power from auxiliary power source (12) when the power feeding flag is on. Second processor (662) performs second processing different from the first processing. When the power feeding flag is on, second processor (662) performs recording processing of storing information processed in second processing in storage (63).

## Description

### TECHNICAL FIELD

The present disclosure generally relates to an encoder, a motor system, a recording method, and a program, and more specifically relates to an encoder that detects a rotation speed of a detection target, a motor system including the encoder, and a recording method and a program used for the encoder.

### BACKGROUND ART

PTL 1 discloses a multi-rotation absolute encoder including a battery that supplies power to a rotation amount counter and a peripheral circuit when a main power source is disconnected.

### Citation List

### Patent Literature

PTL 1: Unexamined Japanese Patent Publication No. H9-218054

### SUMMARY OF THE INVENTION

The multi-rotation absolute encoder (encoder) described in PTL 1 detects the rotation amount (rotation speed) of a detection target when the main power source is disconnected. However, the multi-rotation absolute encoder (encoder) described in PTL 1 has a problem that processing of detecting a physical quantity other than the rotation speed and recording of processed information cannot be performed when the main power source is disconnected.

The present disclosure has been made in view of the above circumstances. An object of the present disclosure is to provide an encoder, a motor system, a recording method, and a program capable of storing processed information even when the main power source is power outage.

An encoder according to one aspect of the present disclosure includes a rotation detector, a first processor, and a second processor. The rotation detector is fed with power from a main power source, and when the main power source is power outage, is fed with power from an auxiliary power source. The first processor is fed with power from the main power source. The second processor is fed with power from the main power source. The first processor is fed with power from the auxiliary power source when the main power source is power outage. The first processor performs first processing and management processing. The first processing is processing of obtaining a rotation speed of a detection target based on a detection result in the rotation detector. The management processing is processing of managing a power feeding flag that indicates whether to feed power from the auxiliary power source to the second processor when the main power source is power outage. The second processor is fed with power from the auxiliary power source when the main power source is power outage and the power feeding flag is on. The second processor performs second processing different from the first processing. The second processor performs recording processing of storing information processed in the second processing in a storage when the power feeding flag is on.

A motor system according to another aspect of the present disclosure includes
the encoder, a motor, a servo amplifier, and a controller. The motor serves as the detection target of the encoder. The servo amplifier controls the motor. The controller transmits a control signal to the servo amplifier.

A recording method according to another aspect of the present disclosure is a recording method to be used in an encoder. The encoder is fed with power from a main power source, and when the main power source is power outage, is fed with power from an auxiliary power source. The encoder includes a rotation detector, a first processor, and a second processor. The recording method includes a first processing step, a management step, a second processing step, and a recording processing step. In the first processing step, a rotation speed of a detection target is obtained with the first processor based on a detection result in the rotation detector. In the management step, a power feeding flag that indicates whether to feed power from the auxiliary power source to the second processor when the main power source is power outage is managed with the first processor. In the second processing step, processing different from the first processing step is performed when the power feeding flag is on. In the recording processing step, when the power feeding flag is on, information processed in the second processing step is stored in a storage.

A program according to another aspect of the present disclosure is a program for causing one or more processors to execute the recording method.

According to the encoder, the motor system, the recording method, and the program of the present disclosure according to the above-described aspects, processed information can be recorded even when a main power source is power outage.

### BRIEF DESCRIPTION OF THE DRAWINGS

Fig. 1 is a schematic view illustrating a configuration of a motor system according to a first exemplary embodiment.
Fig. 2 is a block diagram illustrating a configuration of an encoder included in the motor system according to the first exemplary embodiment.
Fig. 3 is a timing chart illustrating the operation of the encoder according to the first exemplary embodiment.
Fig. 4 is a flowchart illustrating the operation of the encoder according to the first exemplary embodiment.
Fig. 5 is a block diagram illustrating a configuration of an encoder included in a motor system according to a second exemplary embodiment.
Fig. 6 is a flowchart illustrating the operation of the encoder according to the second exemplary embodiment.

### DESCRIPTION OF EMBODIMENT

Hereinafter, preferred exemplary embodiments of the present disclosure will be described in detail with reference to the drawings. In the exemplary embodiments described below, elements common to each other are denoted by the same reference numerals, and redundant description of the common elements may be omitted. The following exemplary embodiments are merely some of various exemplary embodiments of the present disclosure. The exemplary embodiments can be variously changed in accordance with the design and the like as long as the object of the present disclosure can be achieved. Each exemplary embodiment (including each modification) may be implemented by being appropriately combined with other exemplary embodiments (including modifications).

### (First exemplary embodiment)

### (1) Overview

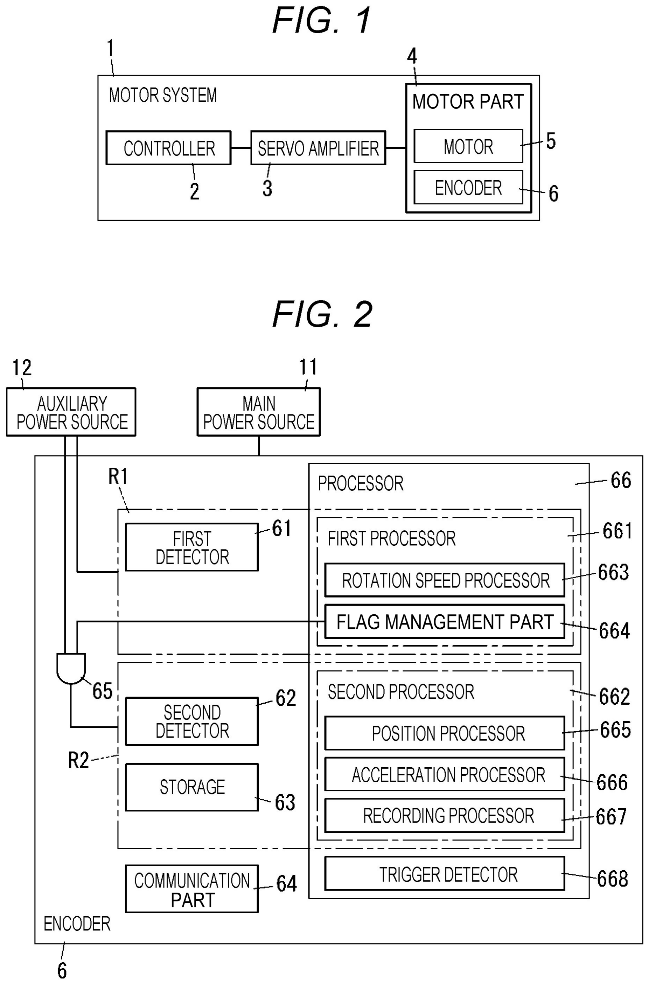

First, an overview of motor system 1 according to a first exemplary embodiment will be described with reference to Figs. 1 and 2.

Fig. 1 is a schematic view illustrating a configuration of motor system 1 according to the first exemplary embodiment. As illustrated in Fig. 1, motor system 1 of the first exemplary embodiment includes motor part 4. Motor part 4 includes, for example, motor 5 that is a servo motor, and encoder 6 that detects the rotation speed or the like of motor 5 that is a detection target.

Fig. 2 is a block diagram illustrating a configuration of encoder 6 included in motor system 1 according to the first exemplary embodiment. As illustrated in Fig. 2, encoder 6 normally operates with the power supplied from main power source 11. When main power source 11 is power outage, a part of the configuration of encoder 6 operates with the power supplied from auxiliary power source 12.

As illustrated in Fig. 2, encoder 6 includes first detector 61 (rotation detector), first processor 661, and second processor 662.

First detector 61 is normally fed with power from main power source 11, and when main power source 11 is power outage, is fed with power from auxiliary power source 12.

First processor 661 is normally fed with power from main power source 11, and when main power source 11 is power outage, is fed with power from auxiliary power source 12. First processor 661 performs first processing of obtaining the rotation speed of the detection target (motor 5 in the first exemplary embodiment) based on the detection result in first detector 61. First processor 661 performs management processing of managing a power feeding flag. The power feeding flag is a flag that indicates whether to feed power from auxiliary power source 12 to second processor 662 when main power source 11 is power outage.

Second processor 662 is fed with power from auxiliary power source 12 when main power source 11 is power outage and the power feeding flag is on. Second processor 662 performs second processing different from the first processing. When the power feeding flag is on, second processor 662 performs recording processing of storing the information processed in the second processing in storage 63.

Encoder 6 of the first exemplary embodiment can store the processed information in storage 63 even when main power source 11 is power outage. When main power source 11 is power outage, encoder 6 of the first exemplary embodiment performs the second processing and the management processing on condition that the power feeding flag is on. Thus, for example, the power consumption of auxiliary power source 12 can be suppressed as compared with the case where the second processing and the management processing are always performed when main power source 11 is power outage.

### (2) Details

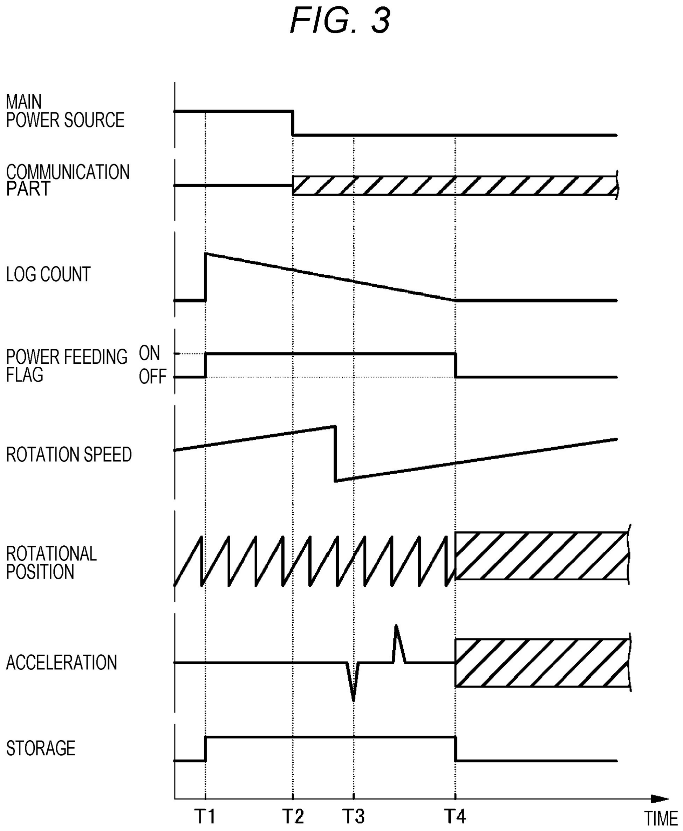

Hereinafter, a detailed configuration of motor system 1 according to the first exemplary embodiment will be described with reference to Figs. 1 to 3. Fig. 3 is a timing chart illustrating the operation of encoder 6 according to the first exemplary embodiment.

### (2.1) Overall configuration

As illustrated in Fig. 1, motor system 1 includes controller 2, servo amplifier 3, and motor part 4.

### (2.2) Configuration of controller

Controller 2 is a host device of servo amplifier 3 and motor part 4. In the first exemplary embodiment, a case where controller 2 is a programmable logic controller (PLC) will be exemplified. Controller 2 may be an electronic control unit (ECU), a desktop or laptop personal computer, a server, or the like.

Controller 2 can communicate with servo amplifier 3. The case where something "can communicate with" something in the present disclosure means that information can be exchanged directly or indirectly via a network, a repeater, or the like by an appropriate communication method of wired communication or wireless communication. Controller 2 transmits a control signal including information such as the rotation direction and the target value of the rotation speed of motor 5 to servo amplifier 3.

### (2.3) Configuration of servo amplifier

Servo amplifier 3 is a host device of motor part 4. Servo amplifier 3 can communicate with controller 2 and encoder 6 of motor part 4. Servo amplifier 3 controls the operation of motor 5 of motor part 4 based on the control signal received from controller 2. More specifically, servo amplifier 3 performs closed-loop control. That is, servo amplifier 3 controls the operation of motor 5 based on the control signal received from controller 2 and the feedback signal received from encoder 6. The feedback signal includes information of a physical quantity such as the rotation speed and the rotational position of motor 5.

### (2.4) Configuration of motor part

As illustrated in Fig. 1, motor part 4 includes motor 5 and encoder 6. In the first exemplary embodiment, motor 5 and encoder 6 are integrally configured. However, it is not essential that motor 5 and encoder 6 are integrally configured.

Motor part 4 of the first exemplary embodiment further includes auxiliary power source 12 that supplies power to encoder 6 when main power source 11 such as a system power source is power outage, for example. Auxiliary power source 12 is, for example, a battery including a lithium ion battery or a nickel hydrogen battery.

### (2.4.1) Configuration of motor

Motor 5 is a servomotor. Motor 5 includes a stator, a rotor that rotates with respect to the stator, and an output shaft that rotates together with the rotor.

### (2.4.2) Configuration of encoder

Encoder 6 of the first exemplary embodiment is a rotary encoder. As illustrated in Fig. 2, encoder 6 includes first detector 61, second detector 62, storage 63, communication part 64, switching part 65, and processor 66.

In the first exemplary embodiment, first detector 61 and first processor 661 of processor 66 are included in power outage power feeding range R1. The "power outage power feeding range R1" of the present disclosure is a conceptual range that includes a configuration to which power is fed from auxiliary power source 12 when main power source 11 is power outage as long as the remaining capacity of auxiliary power source 12 is more than or equal to a predetermined amount. That is, first detector 61 and first processor 661 included in power outage power feeding range R1 are normally fed with power from main power source 11, and when main power source 11 is power outage, power is fed from auxiliary power source 12 as long as the remaining capacity of auxiliary power source 12 is more than or equal to a predetermined amount. The case where something is "fed with power from main power source 11" in the present disclosure is intended to include a case where power is directly fed from main power source 11 and a case where power is indirectly fed from main power source 11 via a power supply circuit or the like. Similarly, the case where something is "fed with power from auxiliary power source 12" is intended to include a case where power is directly fed from auxiliary power source 12 and a case where power is indirectly fed from auxiliary power source 12 via a power supply circuit or the like.

In the first exemplary embodiment, second detector 62, storage 63, and second processor 662 of processor 66 are included in extended power feeding range R2. "Extended power feeding range R2" of the present disclosure is a range obtained by extending power outage power feeding range R1. Specifically, extended power feeding range R2 is a conceptual range that includes a configuration to which power is fed from auxiliary power source 12 when main power source 11 is power outage and a predetermined condition is satisfied. Here, the predetermined condition is that the extension flag is on. Second detector 62, storage 63, and second processor 662 included in extended power feeding range R2 are normally fed with power from main power source 11. Second detector 62, storage 63, and second processor 662 included in extended power feeding range R2 are fed with power from auxiliary power source 12 when main power source 11 is power outage and the power feeding flag is on.

First detector 61 is a rotation detector that detects the rotation speed or the rotational position of the rotor of motor 5. First detector 61 includes a sensor for detecting the rotation speed or the rotational position of the rotor of motor 5. Specifically, first detector 61 of the first exemplary embodiment includes a photo integrated circuit (IC). First detector 61 outputs an electric signal corresponding to the rotation speed or the rotational position of the rotor of motor 5 to rotation speed processor 663 of first processor 661.

Second detector 62 of the first exemplary embodiment is an acceleration detector that detects the acceleration of motor 5. An acceleration sensor for detecting the acceleration of motor 5 is included. The acceleration sensor is, for example, a three-axis acceleration sensor. The three-axis acceleration sensor detects acceleration for each of three axes orthogonal to each other, and outputs an electric signal corresponding to the acceleration to acceleration processor 666 of second processor 662.

Storage 63 of the first exemplary embodiment includes an electrically readable and writable nonvolatile memory. More specifically, storage 63 of the first exemplary embodiment includes an electrically erasable programmable read only memory (EEPROM). Storage 63 may include a rewritable read only memory (ROM) other than the EEPROM.

As described above, power is fed to storage 63 of the first exemplary embodiment from auxiliary power source 12 when main power source 11 is power outage and the power feeding flag is on. Since storage 63 is a nonvolatile storage, the storage can retain information stored in the recording processing even when storage 63 is no longer fed with power from main power source 11 or auxiliary power source 12.

Communication part 64 includes a communication interface that can communicate with servo amplifier 3. Communication part 64 transmits, to servo amplifier 3, a feedback signal including, for example, the rotation speed obtained by first processor 661 in the first processing and information on physical quantities other than the rotation speed obtained by second processor 662 in the second processing. Communication part 64 may include a communication interface that can communicate with controller 2.

When a predetermined condition is satisfied, switching part 65 directly or indirectly electrically connects auxiliary power source 12 and each component included in extended power feeding range R2. Here, the predetermined condition is that the power feeding flag is on.

Processor 66 is embodied by, for example, an application specific integrated circuit (ASIC), a field-programmable gate array (FPGA), or the like. As illustrated in Fig. 2, processor 66 includes first processor 661, second processor 662, and trigger detector 668.

As described above, first processor 661 is included in power outage power feeding range R1. That is, each configuration included in first processor 661 is fed with power from auxiliary power source 12 when main power source 11 is power outage as long as there is a remaining capacity of auxiliary power source 12. First processor 661 includes rotation speed processor 663 and flag management part 664.

As the first processing described above, rotation speed processor 663 obtains the rotation speed and the rotation rate [rpm] of the rotor of motor 5 that is a detection target based on the detection result in first detector 61. Specifically, rotation speed processor 663 obtains the rotation speed of the rotor of motor 5 based on the electric signal output from the photo IC included in first detector 61. For rpm, that is a unit representing the rotation rate, 1 rpm = 1 rotation/minute = 360°/minute is satisfied.

Flag management part 664 manages the power feeding flag that indicates whether to feed power from auxiliary power source 12 to each component included in extended power feeding range R2 when main power source 11 is power outage. In the first exemplary embodiment, when main power source 11 is power outage and the power feeding flag is on, power is fed from auxiliary power source 12 to each component included in extended power feeding range R2. On the other hand, when the power feeding flag is off, power is not fed from auxiliary power source 12 to each component included in extended power feeding range R2.

Flag management part 664 of the first exemplary embodiment turns on the power feeding flag when trigger detector 668 detects a log trigger. The log trigger is a signal indicating the start of power feeding. Then, flag management part 664 turns off the power feeding flag at a timing when a predetermined time has elapsed since the power feeding flag was turned on. The predetermined time is, for example, about 1 second to 5 seconds. Any predetermined time can be set by the user of encoder 6. Since the power feeding flag is on only for a predetermined time, when the power outage of main power source 11 is power outage, the power consumption of auxiliary power source 12 can be suppressed as compared with the case where power is fed from auxiliary power source 12 to extended power feeding range R2 as long as the remaining capacity of auxiliary power source 12 is more than or equal to a predetermined amount.

As described above, second processor 662 is included in extended power feeding range R2. That is, each component included in second processor 662 is fed with power from auxiliary power source 12 when main power source 11 is power outage and the power feeding flag is on. Second processor 662 includes position processor 665, acceleration processor 666, and recording processor 667.

As the second processing described above, position processor 665 obtains the rotational position of the rotor of motor 5 that is a detection target based on the detection result in first detector 61. Specifically, position processor 665 obtains the rotational position of the rotor of motor 5 based on the electric signal output from the photo IC included in first detector 61.

As the second processing described above, acceleration processor 666 obtains the acceleration of motor 5 that is a detection target based on the detection result in second detector 62. Specifically, acceleration processor 666 obtains the acceleration of motor 5 based on the electric signal output from the acceleration sensor included in second detector 62.

As described above, recording processor 667 performs recording processing when the power feeding flag is on. In the recording processing, recording processor 667 stores, in storage 63, the information processed in the second processing performed during the period in which the power feeding flag is on. For example, recording processor 667 stores, in storage 63, information on the rotational position obtained in the second processing, information on the acceleration, information on the time of day or time when each processing is performed, cyclic redundancy check (CRC) information in a communication error with first detector 61 or second detector 62, and the like. In the recording processing, recording processor 667 may cause storage 63 to store the information processed in the first processing performed during the period in which the power feeding flag is on.

In the first exemplary embodiment, as the second processing, the rotational position of the rotor of motor 5 and the acceleration of motor 5 are obtained. Thus, even when main power source 11 is power outage, the information on the rotational position of the rotor of motor 5 and the information on the acceleration of motor 5 can be stored in storage 63.

Trigger detector 668 detects the log trigger. Trigger detector 668 detects at least one of a predetermined anomaly and a predetermined error as the log trigger. That is, flag management part 664 of first processor 661 turns on the power feeding flag based on at least one of the predetermined anomaly and the predetermined error. The predetermined anomaly or the predetermined error is, for example, an anomaly or an error in which there is a possibility that main power source 11 is power outage, and serves as a trigger for recording processor 667 of second processor 662 to start the recording processing. That is, "detects the log trigger" in the present disclosure is intended to include detecting at least one of a predetermined anomaly and a predetermined error serving as the log trigger. According to encoder 6 of the first exemplary embodiment, when main power source 11 is power outage after detecting at least one of a predetermined anomaly and a predetermined error, the information processed in the second processing can be stored in storage 63.

Trigger detector 668 of the first exemplary embodiment detects the log trigger based on the change amount per unit time of the rotation speed obtained in the first processing. That is, flag management part 664 of first processor 661 turns on the power feeding flag based on the change amount per unit time of the rotation speed detected in the first processing.

For example, trigger detector 668 of the first exemplary embodiment detects the log trigger when the change amount per unit time of the rotation speed detected in the first processing is larger than a rotation speed threshold. According to encoder 6 of the first exemplary embodiment, when main power source 11 is power outage after the rotation speed of the detection target greatly changes, the information processed in the second processing can be stored in storage 63.

Trigger detector 668 detects the log trigger based on the change amount per unit time of the rotational position of the rotor of motor 5 obtained in the second processing. That is, flag management part 664 of first processor 661 turns on the power feeding flag based on the change amount per unit time of the rotational position of the rotor of motor 5 obtained in the second processing.

For example, trigger detector 668 of the first exemplary embodiment detects the log trigger when the change amount [°] per unit time of the rotational position obtained in the second processing is larger than a position threshold [°]. According to encoder 6 of the first exemplary embodiment, when main power source 11 is power outage after the rotational position of the detection target greatly changes, the information processed in the second processing can be stored in storage 63.

In addition, trigger detector 668 turns on the power feeding flag based on the acceleration obtained in the second processing. That is, flag management part 664 of first processor 661 turns on the power feeding flag based on the acceleration of motor 5 obtained in the second processing.

For example, trigger detector 668 of the first exemplary embodiment detects the log trigger when the acceleration detected in the second processing is larger than an acceleration threshold. According to encoder 6 of the first exemplary embodiment, when main power source 11 is power outage after the acceleration of the detection target becomes larger than the acceleration threshold, the information processed in the second processing can be stored in storage 63.

Trigger detector 668 of the first exemplary embodiment is not included in power outage power feeding range R1 or extended power feeding range R2. That is, when main power source 11 is power outage, trigger detector 668 is not fed with power from auxiliary power source 12.

### (3) Operation of encoder

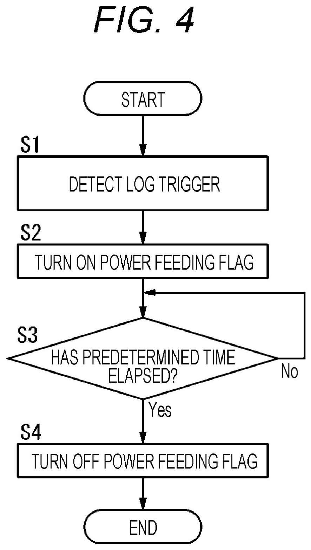

Next, the operation of encoder 6 will be described with reference to Figs. 3 and 4. As described above, Fig. 3 is a timing chart illustrating the operation of encoder 6 according to the first exemplary embodiment. Fig. 4 is a flowchart illustrating the operation of encoder 6 of the first exemplary embodiment.

First, encoder 6 detects the log trigger (step S1 in Fig. 4). When detecting the log trigger, encoder 6 turns on the power feeding flag (step S2 in Fig. 4). Fig. 3 illustrates an example in which encoder 6 has detected the log trigger at timing T1.

As illustrated in Fig. 3, when the power feeding flag is on, encoder 6 performs recording processing. In the example of Fig. 3, the recording processing in the storage is performed in the period between timing T1 and timing T4. Fig. 3 illustrates an example in which main power source 11 is power outage at timing T2. At timing T2, main power source 11 is power outage because of, for example, an interlock or failure of a vehicle in which motor system 1 is provided. However, because the power feeding flag is on at timing T2, encoder 6 performs the first processing, the second processing, and the recording processing using the power supplied from auxiliary power source 12 after timing T2 that is when the main power source is power outage. The operation of communication part 64 that is not included in power outage power feeding range R1 or extended power feeding range R2 stops at timing T2.

In the example of Fig. 3, for example, an impact is applied to motor 5 at timing T3, and a change occurs in the acceleration obtained in the second processing. Then, the information of the acceleration obtained in the second processing is stored in storage 63. Encoder 6 of the first exemplary embodiment can leave a record (log) of the anomaly even when main power source 11 is power outage.

As illustrated in Fig. 4, encoder 6 determines whether a predetermined time has elapsed since power feeding flag was turned on (step S3 in Fig. 4). The time from timing T1 at which the log count by flag management part 664 in Fig. 3 starts to timing T4 at which the log count ends is a predetermined time. That is, Fig. 3 illustrates an example in which flag management part 664 turns off the power feeding flag at timing T4. When the predetermined time has not elapsed (step S3 in Fig. 4: No), encoder 6 repeats the processing in step S3. On the other hand, when the predetermined time has elapsed (step S3: Yes), that is, when the log count ends, encoder 6 turns off the power feeding flag (step S4 in Fig. 4). Then, encoder 6 ends a series of processing illustrated in Fig. 4.

As illustrated in Fig. 3, when the power feeding flag is turned off, the power feeding to extended power feeding range R2 ends, and thus, encoder 6 ends the second processing and the recording processing.

The flowchart illustrated in Fig. 4 is merely an example, and the order of the processing may be appropriately changed, or processing may be appropriately added or deleted.

### (4) Modifications

Hereinafter, modifications of the first exemplary embodiment will be listed.

### (4.1) First modification

Trigger detector 668 may detect the log trigger when communication part 64 receives a predicted alarm signal from an external device such as controller 2 or servo amplifier 3. That is, flag management part 664 turns on the power feeding flag when communication part 64 receives a predicted alarm signal from an external device such as controller 2 or servo amplifier 3.

The predicted alarm signal is a signal transmitted from controller 2 or servo amplifier 3 to encoder 6 when an occurrence of an anomaly such as power outage of main power source 11 is predicted. In the first modification, controller 2 predicts an occurrence of an anomaly. For example, when controller 2 receives an earthquake early warning, controller 2 predicts an occurrence of an anomaly in which main power source 11 is power outage. In addition, for example, when motor system 1 is provided in a vehicle, controller 2 predicts an occurrence of an anomaly (for example, a collision accident) in which main power source 11 is power outage when a sudden approach of another vehicle, a wall, or the like is detected based on a detection result in a camera, a time of flight (TOF) sensor, or the like. When predicting an occurrence of an anomaly, controller 2 transmits a predicted alarm signal to servo amplifier 3. When receiving the predicted alarm signal from controller 2, servo amplifier 3 transmits the predicted alarm signal to encoder 6.

Encoder 6 of the first modification can turn on the power feeding flag in advance when controller 2 or an external device such as the servo amplifier predicts an occurrence of an anomaly, for example.

### (4.2) Other modifications

Functions equivalent to those of processor 66 of encoder 6 according to the first exemplary embodiment may be embodied in a recording method, a (computer) program, a non-transitory recording medium in which the program is recorded, or the like. A recording method according to one aspect is a recording method used in encoder 6. Encoder 6 is fed with power from main power source 11, and is fed with power from auxiliary power source 12 when main power source 11 is power outage. Encoder 6 includes a rotation detector (first detector 61), first processor 661, and second processor 662. The recording method includes a first processing step, a management step, a second processing step, and a recording processing step. In the first processing step, the rotation speed of the detection target is obtained with first processor 661 based on a detection result in the rotation detector. In the management step, first processor 661 manages a power feeding flag that indicates whether to feed power from auxiliary power source 12 to second processor 662 when main power source 11 is power outage. In the second processing step, when the power feeding flag is on, processing different from the first processing step is performed. In the recording processing step, when the power feeding flag is on, the information processed in the second processing step is stored in storage 63. A program according to one aspect is a program for causing one or more processors to execute the recording method described above.

An execution entity of the recording method in the present disclosure includes a computer system. The computer system mainly includes a processor and a memory as hardware. When the processor executes a program recorded in the memory of the computer system, the functions as encoder 6 or the entity executing the recording method in the present disclosure are implemented. The program may be recorded in advance in the memory of the computer system, may be provided through a telecommunication line, or may be provided by being recorded in a non-transitory recording medium such as a memory card, an optical disk, or a hard disk drive readable by the computer system. The processor of the computer system includes one or a plurality of electronic circuits including a semiconductor integrated circuit (IC) or a large scale integration (LSI) circuit. The integrated circuit such as an IC or an LSI mentioned here is called differently depending on the degree of integration, and includes an integrated circuit called a system LSI, a very large scale integration (VLSI), or an ultra large scale integration (ULSI). Further, a FPGA programmed after the production of the LSI or a logic device capable of reconfiguring a conjunction relationship inside the LSI or reconfiguring a circuit section inside the LSI can also be employed as a processor. The plurality of electronic circuits may be integrated into one chip, or may be provided in a distributed manner on a plurality of chips. The plurality of chips may be aggregated in one device or may be provided in a distributed manner in a plurality of devices. The computer system mentioned here includes a microcontroller having one or more processors and one or more memories. Thus, the microcontroller also includes one or a plurality of electronic circuits including a semiconductor integrated circuit or a large scale integration circuit.

Second detector 62 may have a function as a temperature detector. That is, second detector 62 may include a sensor for detecting the temperature of the detection target (for example, motor 5). The sensor for detecting the temperature is, for example, a thermistor. Second detector 62 outputs an electric signal corresponding to the temperature of the detection target to second processor 662. As the second processing, second processor 662 obtains the temperature of the detection target based on the electric signal output from second detector 62. For example, trigger detector 668 detects the log trigger when the temperature of the detection target is higher than a temperature threshold. That is, flag management part 664 turns on the power feeding flag when the temperature of the detection target is higher than the temperature threshold.

In addition, second detector 62 may have a function as a detector that detects the remaining capacity of auxiliary power source 12. When second detector 62 detects that the remaining capacity of auxiliary power source 12 is less than or equal to a predetermined capacity, flag management part 664 may turn on the power feeding flag. Second detector 62 may have a function as a detector that detects a generated voltage of a device in which motor system 1 generates power using the rotation of motor 5. When second detector 62 detects that the generated voltage is less than or equal to a predetermined voltage, flag management part 664 may turn on the power feeding flag.

### (Second exemplary embodiment)

### (1) Overview

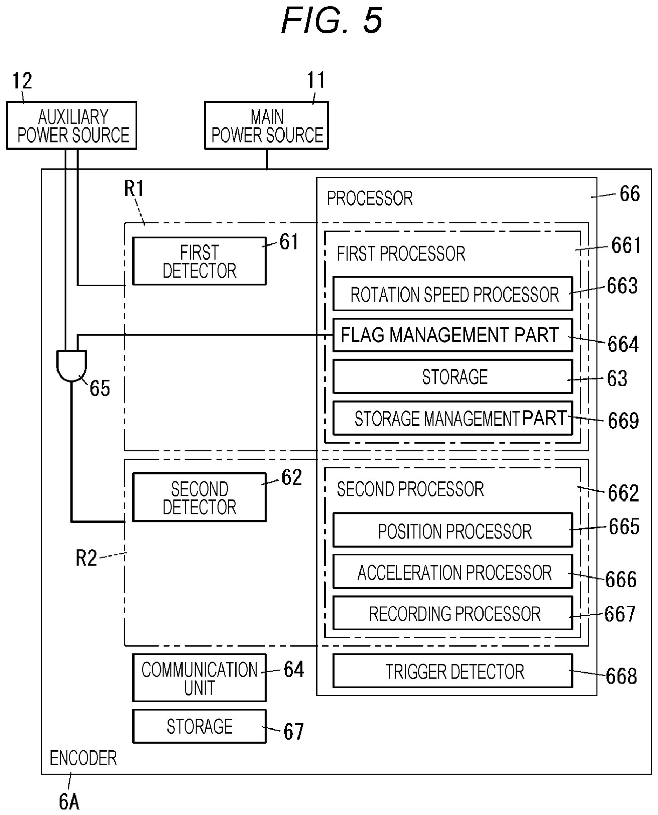

An overview of encoder 6A according to a second exemplary embodiment will be described with reference to Fig. 5.

Encoder 6A according to the second exemplary embodiment is different from encoder 6 according to the first exemplary embodiment in that when the power feeding flag is on, second processor 662 performs recording processing of storing the information processed in the second processing in storage 63 included in first processor 661.

### (2) Configuration of encoder

Fig. 5 is a block diagram illustrating a configuration of encoder 6A included in motor system 1 according to the second exemplary embodiment. As illustrated in Fig. 5, first processor 661 of the second exemplary embodiment includes storage 63 (first storage). Storage 63 of the second exemplary embodiment includes a static random access memory (SRAM).

Encoder 6A further includes storage 67 (second storage) different from storage 63 (first storage). Since storage 67 is not included in power outage power feeding range R1 or extended power feeding range R2, power is not fed from auxiliary power source 12. Storage 67 includes an electrically writable nonvolatile memory. Storage 67 of the second exemplary embodiment includes an EEPROM.

As described above, recording processor 667 of second processor 662 according to the second exemplary embodiment stores, in storage 63, which is an SRAM, the information processed in the second processing performed during the period in which the power feeding flag is on. Here, the power consumption in the case of storing information in the SRAM is smaller than the power consumption in the case of storing information in the EEPROM. Encoder 6A of the second exemplary embodiment can store the information processed in the second processing in storage 63 with relatively small power consumption.

First processor 661 of the second exemplary embodiment further includes storage management part 669.

When main power source 11 has recovered from a power outage, storage management part 669 stores the information stored in storage 63 (first storage) that is an SRAM in storage 67 (second storage) that is an EEPROM.

Encoder 6A of the second exemplary embodiment temporarily stores the information processed in the second processing in storage 63 that is an SRAM to reduce the power consumption of auxiliary power source 12 when main power source 11 is power outage. Then, when main power source 11 has recovered from the power outage, encoder 6A copies the information stored in storage 63 that is an SRAM to storage 67 that is an EEPROM, thereby non-temporarily storing the information in storage 67.

### (3) Operation of encoder

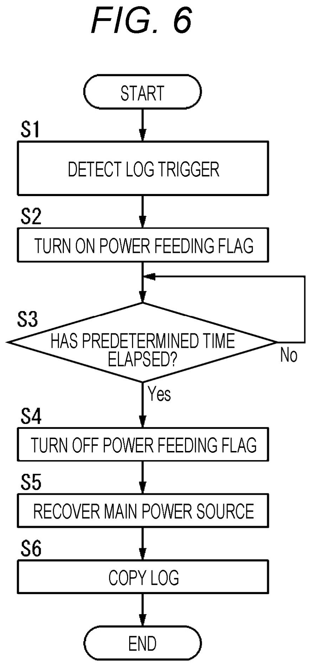

Next, the operation of encoder 6A will be described with reference to Fig. 6. Fig. 6 is a flowchart illustrating the operation of encoder 6A of the second exemplary embodiment. The processing in steps S1 to S4 in Fig. 6 is similar to the processing in steps S1 to S4 in Fig. 4 described in the first exemplary embodiment, and thus description thereof is omitted.

When detecting that main power source 11 has recovered (step S5 in Fig. 6), encoder 6A copies the log (the information processed in the second processing) stored in storage 63 (first storage) to storage 67 (second storage) (step S6 in Fig. 6). Then, encoder 6A ends a series of processing illustrated in Fig. 6.

The flowchart illustrated in Fig. 6 is merely an example, and the order of the processing may be appropriately changed, or processing may be appropriately added or deleted.

### (4) Modifications

Hereinafter, modifications of the second exemplary embodiment will be listed.

Storage 63 may be, for example, a dynamic random access memory (DRAM). Storage 67 may be a writable ROM other than EEPROM.

### (Conclusion)

As is apparent from the exemplary embodiments described above, encoder (6; 6A) according to a first aspect includes a rotation detector (first detector 61), first processor (661), and second processor (662). The rotation detector is fed with power from main power source (11), and when main power source (11) is power outage, is fed with power from auxiliary power source (12). First processor (661) is fed with power from main power source (11). Second processor (662) is fed with power from main power source (11). First processor (661) is fed with power from auxiliary power source (12) when main power source (11) is power outage. First processor (661) performs first processing and management processing. The first processing is processing of obtaining a rotation speed of a detection target based on a detection result in the rotation detector. The management processing is processing of managing a power feeding flag that indicates whether to feed power from auxiliary power source (12) to second processor (662) when main power source (11) is power outage. Second processor (662) is fed with power from auxiliary power source (12) when main power source (11) is power outage and the power feeding flag is on. Second processor (662) performs second processing different from the first processing. When the power feeding flag is on, second processor (662) performs recording processing of storing information processed in second processing in storage (63).

According to this aspect, information other than the rotation speed of the detection target can be stored in storage (63) even when main power source (11) is power outage. In addition, power consumption of auxiliary power source (12) can be suppressed.

In encoder (6; 6A) according to a second aspect, in the first aspect, in the second processing, second processor (662) obtains a rotational position of the detection target based on the detection result in rotation detector (first detector 61).

According to this aspect, information of the rotational position of the detection target can be stored in storage (63) even when main power source (11) is power outage.

Encoder (6; 6A) according to a third aspect, in the first or second aspect, further includes an acceleration detector (second detector 62). The acceleration detector detects an acceleration of the detection target. The power feeding flag indicates whether to feed power from auxiliary power source (12) to second processor (662) and the acceleration detector when main power source (11) is power outage. In the second processing, second processor (662) obtains the acceleration of the detection target based on the detection result in the acceleration detector.

According to this aspect, information of the acceleration of the detection target can be stored in storage (63) even when main power source (11) is power outage.

Encoder (6) according to a fourth aspect, in any one of the first to third aspects, further includes storage (63). Storage (63) includes an electrically writable nonvolatile memory and is fed with power from auxiliary power source (12) when the power feeding flag is on.

According to this aspect, even when power is no longer fed to storage (63) from main power source (11) or auxiliary power source (12), the information stored in the recording processing can be retained.

In encoder (6A) according to a fifth aspect, in any one of the first to third aspects, first processor (661) includes storage (63). Storage (63) includes an SRAM.

According to this aspect, for example, the information can be stored with less power consumption as compared with the case where the information is stored in an EEPROM or the like.

Encoder (6A) according to a sixth aspect, in the fifth aspect, sets storage (63) as a first storage, and further includes a second storage (storage 67) different from the first storage. The second storage is not fed with power from auxiliary power source (12). The second storage includes an electrically writable nonvolatile memory. First processor (661) stores, in the second storage, the information stored in the first storage when main power source (11) has recovered from a power outage.

According to this aspect, the information processed in the second processing is temporarily stored in the SRAM (storage 63), for example, when main power source (11) is power outage, and is stored in the nonvolatile second storage (storage 67) after main power source (11) recovers from the power outage, whereby the power consumption of auxiliary power source (12) can be reduced.

Encoder (6; 6A) according to a seventh aspect, in any one of the first to fifth aspects, first processor (661) turns on the power feeding flag when detecting at least one of a predetermined anomaly and a predetermined error.

According to this aspect, when main power source (11) is power outage after at least one of a predetermined anomaly and a predetermined error is detected, the information processed in the second processing can be stored in storage (63).

Encoder (6; 6A) according to an eighth aspect, in the seventh aspect, first processor (661) turns on the power feeding flag based on a change amount per unit time of the rotation speed obtained in the first processing.

According to this aspect, when main power source (11) is power outage after the rotation speed of the detection target greatly changes, the information processed in the second processing can be stored in storage (63).

In encoder (6; 6A) according to a ninth aspect, in the seventh or eighth aspect, in the second processing, second processor (662) obtains a rotational position of the detection target based on the detection result in rotation detector (first detector 61). First processor (661) turns on the power feeding flag based on a change amount per unit time of the rotational position obtained in the second processing.

According to this aspect, for example when main power source (11) is power outage after the rotational position of the detection target greatly changes, the information processed in the second processing can be stored in storage (63).

Encoder (6; 6A) according to a tenth aspect, in any one of the seventh to ninth aspects, further includes an acceleration detector (second detector 62). The acceleration detector detects an acceleration of the detection target. The power feeding flag indicates whether to feed power from auxiliary power source (12) to second processor (662) and the acceleration detector when main power source (11) is power outage. In the second processing, second processor (662) obtains the acceleration of the detection target based on the detection result in the acceleration detector. First processor (661) turns on the power feeding flag based on the acceleration obtained in the second processing.

According to this aspect, for example when main power source (11) is power outage after the acceleration of the detection target becomes large, the information processed in the second processing can be stored in storage (63).

Encoder (6; 6A) according to an eleventh aspect, in any one of the first to tenth aspects, further includes communication part (64) that communicates with an external device (controller 2 or servo amplifier 3). First processor (661) turns on the power feeding flag when communication part (64) has received a predicted alarm signal from the external device.

According to this aspect, when the external device such as controller (2) predicts an occurrence of an anomaly, the power feeding flag can be turned on in advance.

In encoder (6; 6A) according to a twelfth aspect, in any one of the first to eleventh aspects, first processor (661) turns off the power feeding flag at a timing when a predetermined time has elapsed after turning on the power feeding flag.

According to this aspect, the power consumption of auxiliary power source (12) can be suppressed.

The configurations other than the configurations of the first aspect are not essential for encoder (6; 6A), and can be omitted as appropriate.

Motor system (1) according to a thirteenth aspect includes encoder (6; 6A) according to any one of the first to twelfth aspects, motor (5), servo amplifier (3), and controller (2). Motor (5) is a detection target of the encoder (6). Servo amplifier (3) controls motor (5). Controller (2) transmits a control signal to servo amplifier (3).

According to this aspect, information other than the rotation speed of the detection target can be stored in storage (63) even when main power source (11) is power outage. In addition, power consumption of auxiliary power source (12) can be suppressed.

A recording method according to a fourteenth aspect is a recording method used in encoder (6; 6A). Encoder (6; 6A) is fed with power from main power source (11), and when main power source (11) is power outage, is fed with power from auxiliary power source (12). Encoder (6; 6A) includes a rotation detector (first detector 61), first processor (661), and second processor (662). The recording method includes a first processing step, a management step, a second processing step, and a recording processing step. In the first processing step, the rotation speed of the detection target is obtained with first processor

(661) based on a detection result in the rotation detector. In the management step, first processor (661) manages a power feeding flag that indicates whether to feed power from auxiliary power source (12) to second processor (662) when main power source (11) is power outage. In the second processing step, when the power feeding flag is on, processing different from the first processing step is performed. In the recording processing step, when the power feeding flag is on, the information processed in the second processing step is stored in storage (63).

According to this aspect, the processed information can be stored in storage (63) even when main power source (11) is power outage. In addition, power consumption of auxiliary power source (12) can be suppressed.

A program according to a fifteenth aspect is a program for causing one or more processors to execute the recording method according to the fourteenth aspect.

According to this aspect, the processed information can be stored in storage (63) even when main power source (11) is power outage. In addition, power consumption of auxiliary power source (12) can be suppressed.

### INDUSTRIAL APPLICABILITY

According to the encoder, the motor system, the recording method, and the program of the present disclosure, processed information can be recorded even when a main power source is power outage. Thus, the encoder, the motor system, the recording method, and the program of the present disclosure are industrially useful.

### REFERENCE MARKS IN THE DRAWINGS

1: motor system
11: main power source
12: auxiliary power source
2: controller (external device)
3: servo amplifier (external device)
5: motor (detection target)
6: encoder
6A: encoder
61: first detector (rotation detector)
62: second detector (acceleration detector)
661: first processor
662: second processor
63: storage
64: communication part
67: storage

## Claims

1. An encoder comprising:
a rotation detector that is fed with power from a main power source, and when the main power source is power outage, is fed with power from an auxiliary power source;
a first processor fed with power from the main power source; and
a second processor fed with power from the main power source,
wherein
the first processor is fed with power from the auxiliary power source when the main power source is power outage,
the first processor performs:
first processing of obtaining a rotation speed of a detection target based on a detection result in the rotation detector, and
management processing of managing a power feeding flag that indicates whether to feed power from the auxiliary power source to the second processor when the main power source is power outage,
the second processor is fed with power from the auxiliary power source when the main power source is power outage and the power feeding flag is on, and
the second processor performs:
second processing different from the first processing; and
recording processing of storing information processed in the second processing in a storage when the power feeding flag is on.

2. The encoder according to Claim 1,
wherein the second processor obtains a rotational position of the detection target based on a detection result in the rotation detector in the second processing.

3. The encoder according to Claim 1, further comprising an acceleration detector that detects an acceleration of the detection target,
wherein
the power feeding flag indicates whether to feed power from the auxiliary power source to the second processor and the acceleration detector when the main power source is power outage, and
the second processor obtains the acceleration of the detection target based on the detection result in the acceleration detector in the second processing.

4. The encoder according to Claim 1, further comprising the storage,
wherein the storage includes an electrically writable nonvolatile memory and is fed with power from the auxiliary power source when the power feeding flag is on.

5. The encoder according to Claim 1, wherein
the first processor includes the storage, and
the storage includes a static random access memory.

6. The encoder according to Claim 5, wherein
the storage is set as a first storage, and a second storage different from the first storage is further included,
the second storage includes an electrically writable nonvolatile memory that is not fed with power from the auxiliary power source, and
the first processor stores, in the second storage, the information stored in the first storage when the main power source has recovered from a power outage.

7. The encoder according to Claim 1,
wherein the first processor turns on the power feeding flag when detecting at least one of a predetermined anomaly and a predetermined error.

8. The encoder according to Claim 7,
wherein the first processor turns on the power feeding flag based on a change amount per unit time of the rotation speed obtained in the first processing.

9. The encoder according to Claim 7, wherein
the second processor obtains a rotational position of the detection target based on the detection result in the rotation detector in the second processing, and
the first processor turns on the power feeding flag based on a change amount per unit time of the rotational position obtained in the second processing.

10. The encoder according to Claim 7, further comprising an acceleration detector that detects an acceleration of the detection target,
wherein
the power feeding flag indicates whether to feed power from the auxiliary power source to the second processor and the acceleration detector when the main power source is power outage,
the second processor obtains the acceleration of the detection target based on the detection result in the acceleration detector in the second processing, and
the first processor turns on the power feeding flag based on the acceleration obtained in the second processing.

11. The encoder according to Claim 1, further comprising a communication part that communicates with an external device,
wherein the first processor turns on the power feeding flag when the communication part has received a predicted alarm signal from the external device.

12. The encoder according to Claim 1,
wherein the first processor turns off the power feeding flag at a timing when a predetermined time has elapsed after turning on the power feeding flag.

13. A motor system comprising:
the encoder according to any one of Claims 1 to 12;
a motor serving as the detection target of the encoder;
a servo amplifier that controls the motor; and
a controller that transmits a control signal to the servo amplifier.

14. A recording method to be used in an encoder that is fed with power from a main power source, and when the main power source is power outage, is fed with power from an auxiliary power source, the encoder including a rotation detector, a first processor, and a second processor, the recording method comprising:
a first processing step of obtaining a rotation speed of a detection target with the first processor based on a detection result in the rotation detector;
a management step of managing, with the first processor, a power feeding flag that indicates whether to feed power from the auxiliary power source to the second processor when the main power source is power outage;
a second processing step of performing processing different from the first processing step when the power feeding flag is on; and
a recording processing step of storing information processed in the second processing step in a storage when the power feeding flag is on.

15. A program for causing one or more processors to execute the recording method according to Claim 14.
